(19) **Europäisches Patentamt / European Patent Office / Office européen des brevets**

(11) **EP 4 202 381 B1**

(12) **EUROPEAN PATENT SPECIFICATION**

(45) Date of publication and mention of the grant of the patent:
**06.03.2024 Bulletin 2024/10**

(21) Application number: **21217390.0**

(22) Date of filing: **23.12.2021**

(51) International Patent Classification (IPC):
**B65B 19/34** *(2006.01)* **B65B 1/34** *(2006.01)*

(52) Cooperative Patent Classification (CPC):
**G01G 13/003; B65B 1/34; B65B 19/34; G01G 13/006; G01G 13/04; G01G 13/06**

(54) **A METHOD FOR CONTINUOUSLY DOSING A TARGET WEIGHT OF LONG-TYPE PASTA AND A DOSING APPARATUS**

VERFAHREN ZUM KONTINUIERLICHEN DOSIEREN EINES ZIELGEWICHTES VON LANGEN TEIGWAREN UND DOSIERVORRICHTUNG

PROCÉDÉ DE DOSAGE CONTINU D'UN POIDS CIBLE DE PÂTES DE TYPE LONG ET APPAREIL DE DOSAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.06.2023 Bulletin 2023/26**

(73) Proprietor: **Pavan S.p.A.**
**35015 Galliera Veneta (PD) (IT)**

(72) Inventor: **SERAFINI, Daniele**
**51100 PISTOIA (IT)**

(74) Representative: **Dondi, Silvia**
**Bugnion S.p.A.**
**Largo Michele Novaro, 1/A**
**43121 Parma (IT)**

(56) References cited:
**WO-A1-2015/044796**

**Description**

The present invention relates to a method for continuously dosing a target weight of long-type pasta and to a dosing apparatus.

In particular, the proposed method and apparatus find application in dosing long-type pasta, such as spaghetti, linguine, bucatini, fettuccine, tagliatelle, etc.

Dosing machines for long-type pasta are already known for weighing pasta before packaging it.

These machines are used to partition an overall amount of pasta in predefined weight portions (or doses) to be received by a feeding conveyor that guides them towards a packaging machine.

For example, document WO 2015/044796 A1 discloses a pasta dosing machine for dosing long-type pasta comprising a combination of two dosing devices:

- a rough dosing device, provided with a channel having a transversal blade, for discharging in a first basket a rough weight amount of pasta corresponding to 80%-90% of the target weight;
- a fine dosing device, provided with a channel having a transversal blade, for discharging a further fine amount of pasta in a second basket to be added to the rough weight amount coming from the first basket in order to obtain the target weight of pasta to be packaged.

Upon measuring the rough weight amount by an electronic load cell, the fine weight amount is calculated as the difference between the target weight and the measured rough weight.

The fine dosing device is then triggered to adjust the height of its blade and to release a further fine amount of pasta that should correspond to the calculated fine weight amount.

Indeed, the further fine amount of pasta is established by the volume of the fine dosing channel and the height of its blade. Thus, there occurs a conversion from the calculated weight to a volume of pasta to be discharged by the fine dosing channel, which is used to adjust the height of the blade of the fine dosing device.

A known method for calibrating the fine dosing device consists in performing a fixed number N of discharges of pasta through the fine dosing channel only, with the corresponding blade at a predefined height.

Upon measuring the weight of the overall amount of pasta discharged at the end of the N discharges, a calibration value is calculated as the ratio between said weight and N. The calibration value is the "specific weight" of the pasta arranged in the fine dosing channel.

After modelling the fine dosing device as a linear system, the height of its blade is calculated as a function of the fine weight amount (previously calculated) divided by the calibration value.

Nevertheless, this linear model is too simplistic since it assumes that the "zero height" corresponds to a zero discharge of product (straight line crossing the origin).

This is unlikely in view of the discrete format of pasta and of the mechanical tolerances that cannot be neglected.

In addition, with this simple model pasta is considered as a repeatable product over time. This is surely an ideal approach, since pasta elements may deviate from an ideal shape, affecting the loading of the fine dosing channel.

Finally, the production rate is different than the calibration rate and this shall be taken into account.

Considering all these factors, the real system may deviate considerably from the ideal system, thus requiring periodic calibrations that are carried out manually by the operators.

There is felt the need to increase the accuracy in setting the height of the blade in the fine dosing channel.

In this context, the technical task at the basis of the present invention is to propose a method for continuously dosing a target weight of long-type pasta and a dosing apparatus, which overcome the above-mentioned drawbacks of the prior art.

In particular, the object of the present invention is to propose a method for continuously dosing a target weight of long-type pasta according to independent claim 1 and a dosing apparatus according to independent claim 12, that allow a more accurate dosing of long-type pasta.

Another object of the present invention is to propose a method for continuously dosing a target weight of long-type pasta and a dosing apparatus, that take into account also real shapes of long-type pasta, real conditions of mechanical components and the production rate, thus avoiding or limiting periodic manual calibrations.

The stated technical task and specified objects are substantially achieved by a method for continuously dosing a target weight of long-type pasta using a dosing apparatus comprising a rough dosing channel and a fine dosing channel with a partition element transversally movable within the fine dosing channel, the method comprising the steps of:

- calibrating a level of the partition element in the fine dosing channel;
- feeding the rough dosing channel with long-type pasta;
- collecting a rough amount of long-type pasta discharged through the rough dosing channel and measuring a weight $W_{ROUGH}$ of the rough amount;

- calculating a fine weight $W_{FINE}$ of long-type pasta to be fed from the fine dosing channel as a difference between the target weight $W_{TARGET}$ and the measured rough weight $W_{ROUGH}$,
- converting the fine weight $W_{FINE}$ into a level $h_{FINE}$ of the partition element with respect to a bottom level of the fine dosing channel on the basis of the calibrating step of the fine dosing channel;
- arranging the partition element at the level $h_{FINE}$ obtained from the conversion and feeding the fine dosing channel with long-type pasta,

characterised in that the step of calibrating a level of the partition element in the fine dosing channel comprises determining a preliminary equation EQ1 of a characteristic straight line of weight as a function of level of the partition element in the fine dosing channel, the preliminary equation EQ1 being determined by acquiring coordinates of a first point and of a second point on a plane and by calculating the preliminary equation EQ1 as a straight line passing through said points.

According to one aspect of the invention, the step of determining the preliminary equation EQ1 comprises:

- placing the partition element at a first predefined level $h_1$ with respect to the bottom level and performing a first cycle of N dosing discharges of long-type pasta through the fine dosing channel;
- weighing a first overall amount $W_1$ of long-type pasta dosed at the completion of the first cycle of N dosing discharges, the first predefined level $h_1$ being the x-coordinate of the first point and the first overall amount $W_1$ divided by N being the y-coordinate of the first point;
- placing the partition element at a second predefined level $h_2$ with respect to the bottom level and performing a second cycle of N dosing discharges of long-type pasta through the fine dosing channel, the second predefined level $h_2$ being different from the first predefined level h1 ;
- weighing a second overall amount $W_2$ of long-type pasta dosed at the completion of the second cycle of N dosing discharges, the second predefined level $h_2$ being the x-coordinate of the second point and the second overall amount $W_2$ divided by N being the y-coordinate of the second point;
- determining a slope m and an intercept q at origin of the preliminary equation EQ1 according to formulas:

*(1.2)*

$$m = \frac{W_1 - W_2}{N * (h_1 - h_2)}$$

*(1.3)*

$$q = W_1 - m * h_1$$

According to one aspect of the invention, the step of calibrating the fine dosing channel further comprises time-adapting the characteristic straight line using a linear regression model.

According to one aspect of the invention, time-adapting the characteristic straight line comprises, for each feeding of the fine dosing channel:

- measuring a fine weight $W_{FINE-i}$ of long-type pasta fed from the fine dosing channel;
- retrieving a level $h_{FINE-i}$ of the partition element with respect to the bottom level,

so as to obtain a plurality of points of fine weight $W_{FINE-i}$ and level $h_{FINE-i}$ in a dispersion graph of fine weight $W_{FINE-i}$ as a function of level $h_{FINE-i}$ of the partition element in the fine dosing channel;
applying a least-squares approach to the points of the dispersion graph for calculating a slope m and an intercept q at origin of a straight line that fits the points in the dispersion graph.

According to one aspect of the invention, time-adapting the characteristic straight line is carried out in response to the occurrence of a predefined condition at each feeding of the fine dosing channel.

According to one embodiment of the invention, the method further comprises calculating Pearson's correlation coefficient of the straight line fitting the dispersion graph, the predefined condition being a Pearson's correlation coefficient higher than a pre-established value.

In particular, the pre-established value of the Pearson's correlation coefficient is 0.85.

According to one aspect of the invention, the method further comprises:

- setting an intensity of vibration to the fine dosing channel;

- calculating Pearson's correlation coefficient of the straight line fitting the dispersion graph;
- in response to a calculated Pearson's correlation coefficient equal or lower than the pre-established value, increasing the intensity of vibration of the fine dosing channel.

According to one aspect of the invention, the step of converting the fine weight $W_{FINE}$ into a level $h_{FINE}$ of the partition element comprises computing the level $h_{FINE}$ of the partition element (7) according to the formula:

*(1.5)*

$$h_{FINE} = \frac{(W_{TARGET} - W_{ROUGH}) - q}{m}$$

where $W_{TARGET}$ is the target weight, $W_{ROUGH}$ is the measured rough weight, m is the slope of the preliminary equation EQ1 or the time-adapted straight line, and q is the intercept at origin of the preliminary equation EQ1 or the time-adapted straight line.

According to one aspect of the invention, the step of performing the first cycle of N dosing discharges of long-type pasta through the fine dosing channel comprises repeating the following sequence for N times:

- configuring the partition element in an idle position in which it is outside the fine dosing channel and feeding long-type pasta to the fine dosing channel;
- configuring the partition element at the first predefined level $h_1$ and in a working position in which it is arranged transversally within the fine dosing channel for separating an upper zone of the fine dosing channel from a lower zone of the fine dosing chamber;
- discharging the amount of long-type pasta from the lower zone.

According to one aspect of the invention, the step of performing the second cycle of N dosing discharges of long-type pasta through the fine dosing channel comprises repeating the following sequence for N times:

- configuring the partition element in an idle position in which it is outside the fine dosing channel and feeding long-type pasta to the fine dosing channel;
- configuring the partition element at the second predefined level $h_2$ and in a working position in which it is arranged transversally within the fine dosing channel for separating an upper zone of the fine dosing channel from a lower zone of the fine dosing chamber;
- discharging the amount of long-type pasta from the lower zone.

According to one aspect of the invention, during the first cycle of N dosing discharges of long-type pasta, the dosing discharges repeat with a time rate of 1 second.

According to one aspect of the invention, during the second cycle N dosing discharges of long-type pasta, the dosing discharges repeat with a time rate of 1 second.

According to one embodiment, the bottom level of the fine dosing channel is defined by a second support arranged inside fine dosing channel and configurable at least in an open position in which it allows long-type pasta passing through, and a closed position in which it prevents long-type pasta passing thorugh.

The stated technical task and specified objects are substantially achieved by a dosing apparatus for dosing long-type pasta, comprising:

- a feeding channel for feeding long-type pasta;
- a rough dosing channel and a fine dosing channel in communication with the feeding channel so as to receive long-type pasta, the dosing channels being oriented in such a way as to dose long-type pasta by gravity;
- a first partition element arranged transversely to the rough dosing channel and movable therethrough;
- a second partition element arranged transversely to the fine dosing channel and movable therethrough between a working position in which it is transversally inserted within the fine dosing channel, and an idle position in which it is extracted from the fine dosing channel;
- at least one first loading cell arranged downstream a bottom end of the rough dosing channel for weighing long-type pasta transferred from the rough dosing channel;
- a control unit configured to control a level of the second partition element with respect to a bottom level of the fine dosing channel and the movement of the second partition element within the fine dosing channel,

characterised in that said control unit is configured to:

- calibrate a level of the second partition element in the fine dosing channel, the calibrating comprising determining a preliminary equation EQ1 of a characteristic straight line of weight as a function of level of the second partition element in the fine dosing channel, the preliminary equation EQ1 being determined by acquiring coordinates of a first point and of a second point and by calculating the preliminary equation EQ1 as a straight line passing through said points;
- convert a fine weight $W_{FINE}$ of long-type pasta to be fed from the fine dosing channel into a level $h_{FINE}$ of the partition element with respect to the bottom level on the basis of the calibration of the fine dosing channel;
- command the positioning of the partition element at the level $h_{FINE}$ obtained from the conversion.

According to one embodiment, the dosing apparatus further comprises a support arranged inside the fine dosing channel and configurable at least in an open position in which it allows long-type pasta passing through, and a closed position in which it prevents long-type pasta passing thorugh.

In particular, the support defines the bottom level of the fine dosing channel.

According to one embodiment, the dosing apparatus further comprises two separate means for actuating the partition element and the support.

According to another embodiment, the dosing apparatus further comprises a common means for actuating both the partition element and the support.

According to one aspect of the invention, the control unit is further configured to command the partition element and the support in a substantially alternating manner.

According to one embodiment, the dosing apparatus further comprises a first basket downstream the rough dosing channel.

In particular, the first loading cell is operatively active on the first basket to measure the weight of pasta discharged from the rough dosing channel.

Preferably, the dosing apparatus further comprises a second basket downstream the fine dosing channel.

In particular, the first basket is upstream the second basket and configurable to open in the second basket.

According to one embodiment, the control unit is further configured to time-adapt the characteristic straight line using a linear regression model.

According to one aspect fo the invention, the dosing apparatus further comprises:

- first vibration means that are operatively active on the rough dosing channel for imparting vibrations thereto so as to facilitate the descent of long-type pasta;
- second vibration means that are operatively active on the fine dosing channel for imparting vibrations thereto so as to facilitate the descent of long-type pasta, the second vibration means being distinct and independent from the first vibration means,

wherein the control unit is further configured to calculate Pearson's correlation coefficient of the straight line of the linear regression model and, in response to a Pearson's correlation coefficient lower or equal to a pre-established value, the control unit is configured to increase the intensity of vibration imparted by the second vibration means to the fine dosing channel.

Further characteristics and advantages of the present invention will more fully emerge from the non-limiting description of a preferred but not exclusive embodiment of a method for continuously dosing a target weight of long-type pasta and a dosing apparatus, as depicted in the attached figures:

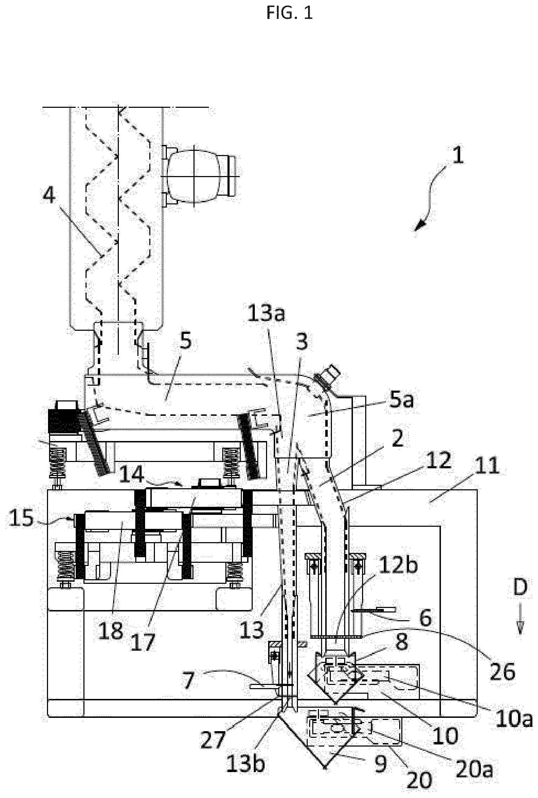

- figure 1 is a cross-section of a dosing apparatus for dosing long-type pasta, according to the present invention;
- figures 2-3 are enlarged views of the fine dosing channel of the dosing apparatus of figure 1, in particular showing the second partition element and the second support in two different configurations;
- figure 4(a) illustrates a flow-diagram of a method for continuously dosing a target weight of long-type pasta, according to an embodiment of the present invention;
- figure 4(b) is a continuation of the flow-diagram of figure 4(a);

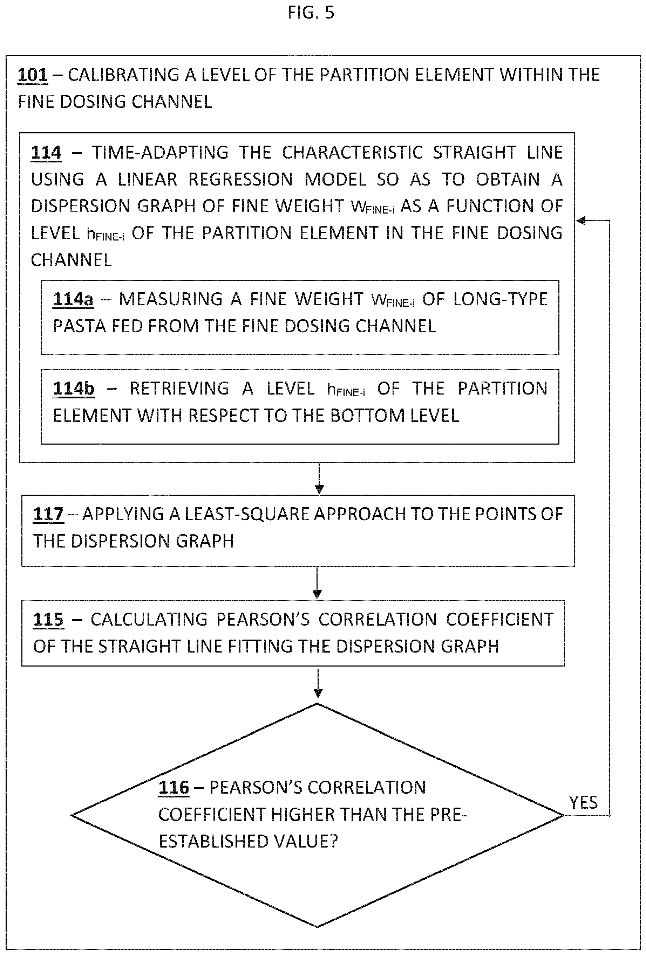

- figure 5 illustrates another embodiment of the calibration step (block 101) of the method of figure 4(a);
- figure 6 illustrates an embodiment of the block 103 of figure 4(a);
- figure 7 illustrates an embodiment of the block 105 of figure 4(a);
- figure 8 illustrates a characteristic straight line (h, W) for calibrating the partition element in the fine dosing channel of the dosing apparatus of figure 1;
- figure 9 illustrates a dispersion graph used in the method of figure 5.

With reference to the figures, number 1 indicates a dosing apparatus for dosing long-type pasta, such as spaghetti, linguine, bucatini, fettuccine, tagliatelle, etc.

The dosing apparatus 1 comprises two dosing devices, that are:

- a rough dosing device 2;
- a fine dosing device 3.

The rough dosing device 2 comprises a rough dosing channel 12 for dosing a rough weight amount of pasta corresponding to 80%-90% of a target weight $W_{TARGET}$ of pasta to be dosed.

The fine dosing device 3 comprises a fine dosing channel 13 for dosing a fine weight amount of pasta to be added to the rough weight amount in order to obtain the target weight $W_{TARGET}$.

The two dosing channels 12, 13 are adapted to receive long-type pasta coming from a production line (not illustrated) and to transfer it to a packaging line (not illustrated).

According to an aspect of the invention, the rough dosing channel 12 and the fine dosing channel 13 are arranged so that long-type pasta is dosed through them by gravity.

According to the illustrated embodiment, the rough dosing channel 12 and the fine dosing channel 13 are partially parallel to each other.

Preferably, the rough dosing channel 12 and the fine dosing channel 13 are arranged close to each other.

Preferably, they bifurcate from a common origin.

In particular, the fine dosing channel 13 is longer than the rough dosing channel 12.

Preferably, the rough dosing channel 12 has a larger cross-section than the fine dosing channel 13.

According to one example, the fine dosing channel 13 has a first tapered tract starting from a top end 13a. The first tapered tract is then followed by a second rectilinear tract (with constant cross-section) developing toward a bottom end 13b of the fine dosing channel 13.

According to the illustrated embodiment, the dosing apparatus 1 comprises also a vertical feeding channel 4.

The long-type pasta consists of elongated elements, each developing along a main direction.

The pasta elongated elements are arranged in parallel and they are fed to the dosing channels 12, 13 by the vertical feeding channel 4, that is usually called "descender" or "feeding chimney" in this specific field.

In an embodiment of the invention, illustrated herewith, the descender 4 is shaped according to a serpentine path.

In particular, the descender 4 is arranged (that means oriented) so that long-type pasta is transferred towards the dosing channels 12, 13 by gravity.

The descender 4 is in communication with the dosing channels 12, 13 directly or indirectly. According to the illustrated embodiment, the dosing apparatus 1 also comprises a horizontal feeding channel 5 that receives long-type pasta from the descender 4 and transfers it to the dosing channels 12, 13 downwards.

The dosing channels 12, 13 bifurcate from an end 5a of the horizontal feeding channel 5.

The pasta elongated elements arrive in the dosing channels 12, 13 with their main direction that is substantially orthogonal to a descent direction D of the pasta within the dosing channels 12, 13.

The rough dosing device 2 comprises a first partition element 6 that is arranged transversely to the rough dosing channel 12 and is movable therethrough.

Analogously, the fine dosing device 3 comprises a second partition element 7 that is arranged transversely to the fine dosing channel 13 and is movable therethrough.

According to an embodiment, both the partition elements 6, 7 are paddles.

According to another embodiment, both the partition elements 6, 7 are blades.

In particular, the first partition element 6 is movable between:

- a working position in which the first partition element 6 is transversally inserted within the rough dosing channel 12, and
- an idle position in which the first partition element 6 is extracted from the rough dosing channel 12.

In practice, the first partition element 6 is movable orthogonally with respect to the descent direction D of the long-type pasta.

Analogously, the second partition element 7 is movable between:

- a working position in which the second partition element 7 is transversally inserted within the fine dosing channel 13, and
- an idle position in which the second partition element 7 is extracted from the fine dosing channel 13.

In practice, the second partition element 7 is movable orthogonally with respect to the descent direction D of the long-type pasta.

The movement of each partition element 6, 7 between the working and the idle position may be obtained by any suitable actuating means, like a pneumatic cylinder or the like.

Preferably, long-type pasta coming from the rough dosing channels 12 is first collected in a first basket 8.

Long-type pasta coming from the fine dosing channel 13 is collected in a second basket 9.

According to an embodiment of the invention, these two baskets 8, 9 are arranged in series. In particular, the second basket 9 is arranged downstream the first basket 8.

Preferably, the first basket 8 has an outlet that flows into an inlet of the second basket 9.

The outlet of the first basket 8 is preferably equipped with a closing element so that the first basket 8 may be separated from the second basket 9.

The dosing apparatus 1 further comprises first weighing means 10 for measuring the weight of long-type pasta downstream the rough dosing channels 12.

The first weighing means 10 preferably comprises a first loading cell 10a operatively active on the first basket 8 to measure the weight of the pasta discharged from the rough dosing channel 12.

The dosing apparatus 1 comprises also second weighing means 20 that preferably comprises a second loading cell 20a operatively active on the second basket 9 to measure the weight of the pasta contained therein.

As already explained, the pasta in the second basket 9 may arrive directly from the fine dosing channel 13 or from the first basket 8.

The dosing apparatus 1 further comprises a frame 11 to which the dosing channels 12, 13 are rigidly mounted.

In order to support pasta while preparing the dose, the rough dosing device 2 further comprises a first support 26 that is arranged transversely to the rough dosing channel 12.

The first support 26 is arranged in a lower level than the first partition element 6 with respect to the rough dosing channel 12.

The level of the first partition element 6 with respect to the rough dosing channel 12 may be adjusted, whereas the level of the first support 26 is fixed with respect to the rough dosing channel 12.

The first support 26 and the first partition element 6 work in a substantially alternating manner. In particular, when the first partition element 6 is inserted in the rough dosing channel 12 (thus assuming its working position), the first support 26 is configured in an open position so that pasta may be discharged through it.

Viceversa, when the first partition element 6 is extracted from the rough dosing channel 12 (thus assuming its idle position), the first support 26 is in a closed position so that pasta may be accumulated on it.

According to one embodiment, there are present two separate means for actuating the first partition element 6 and the first support 26.

The two actuating means are controlled so that the first support 26 and the first partition element 6 work alternatively as described above.

According to another embodiment, there is a common means for actuating both the first partition element 6 and the first support 26.

Analogously, the fine dosing device 3 further comprises a second support 27 that is arranged transversely to the fine dosing channel 13.

The second support 27 is arranged in a lower level than the second partition element 7 with respect to the fine dosing channel 13.

The level of the second partition element 7 with respect to the fine dosing channel 13 may be adjusted, whereas the level of the second support 27 is fixed with respect to the fine dosing channel 13. Thus, the level of the second partition element 7 is measured as the height of the second partition element 7 with respect to the second support 27. Thus, this level is generically indicated with letter "h".

The second support 27 and the second partition element 7 work in a substantially alternating manner. In particular, when the second partition element 7 is inserted in the fine dosing channel 13 (thus assuming its working position), the second support 27 is configured in an open position so that pasta may be discharged through it.

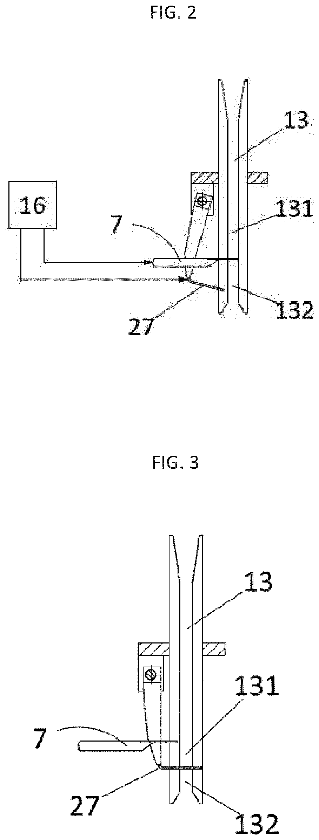

This is shown in figure 2.

Viceversa, when the second partition element 7 is extracted from the fine dosing channel 13 (thus assuming its idle position), the second support 27 is in a closed position so that pasta may be accumulated on it.

This is shown in figure 3.

According to one embodiment, there are present two separate means for actuating the second partition element 7 and the second support 27.

The two actuating means are controlled so that the second support 27 and the second partition element 7 work alternatively as described above.

According to another embodiment, there is a common means for actuating both the second partition element 7 and the second support 27.

Advantageously, the two dosing channels 12, 13 are imparted vibrations by means of two distinct and independent vibration means 14, 15.

The role of the vibration means 14, 15 is to facilitate the descent of long-type pasta through the corresponding dosing channel 12, 13.

In particular, the dosing apparatus 1 comprises first vibration means 14 that are operatively active on the rough dosing channel 12 for imparting vibrations thereto, and second vibration means 15 that are operatively active on the fine dosing channel 13 for imparting vibrations thereto.

The first vibration means 14 are elastically connected to a first support frame 17, whereas the second vibration means 15 are elastically connected to a second support frame 18.

Each vibration means 14, 15 preferably comprise an electromagnet.

A method for continuously dosing a target weight of long-type pasta, according to the present invention, is described hereafter.

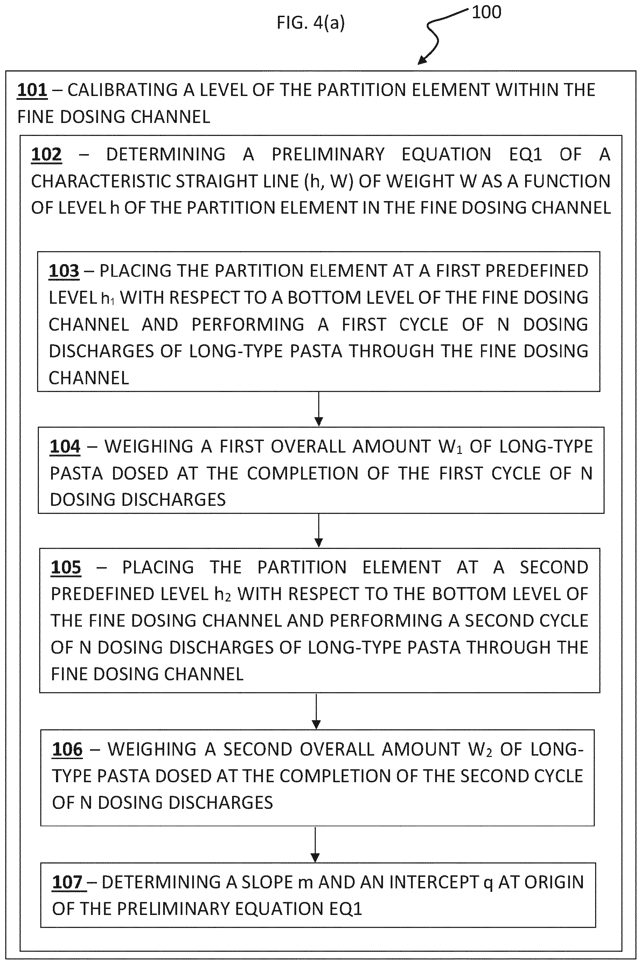

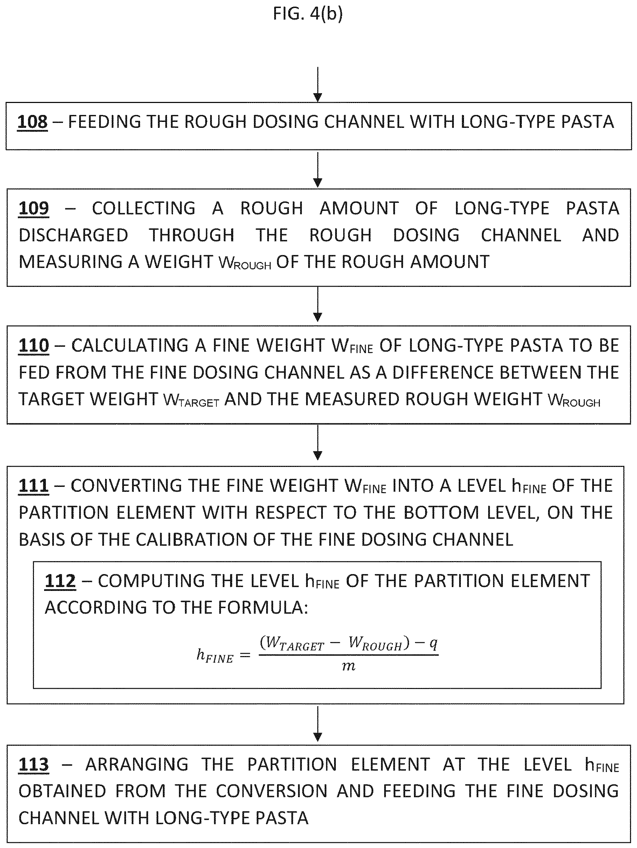

A flow diagram of the method, indicated with number 100, is illustrated in figures 4(a)-4(b).

The method 100 starts with a first calibrating step 101 of the fine dosing channel 13. This first calibrating step 101 serves for calibrating the level of the second partition element 7 with respect to the second support 27.

As already stated above, the second support 27 is in fact at a fixed level with respect to the fine dosing channel 13.

In practical words, the level of the second partition element 7 indicates the height of the second partition element 7 with respect to the second support 27.

In the foregoing the second partition element 7 will be referred to "partition element" since it is clear that all the explanation refers to the fine dosing channel 13.

The first calibrating step 101 comprises determining a preliminary equation EQ1 of a characteristic straight line of weight W (y-axis) as a function of level h (x-axis) of the partition element 7 in the fine dosing channel 13.

Advantageously, the preliminary equation EQ1 is determined by acquiring coordinates of a first point A and of a second point B on the plane (h, W) and by calculating the preliminary equation EQ1 as a straight line passing through these two points A, B.

The preliminary equation EQ1 is in the form:

$$(1.1)$$

$$W = m * h + q$$

where m is the slope and q is the intercept at the origin of the straight line passing through the points A, B.

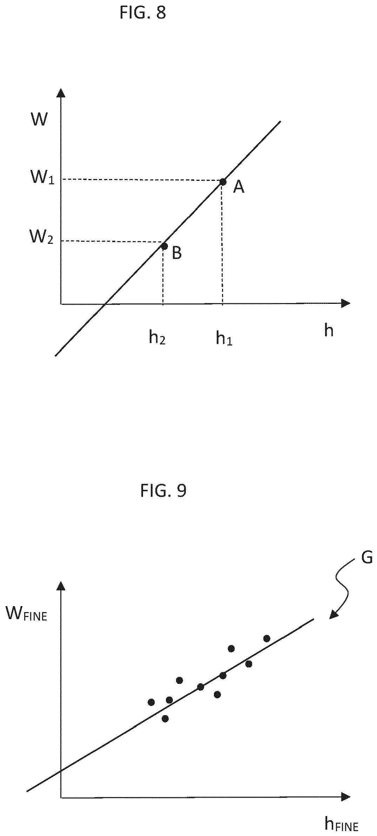

These straight line passing through the points A, B is illustrated in figure 8. The step of determining the preliminary equation EQ1, indicated with number 102, starts with placing the partition element 7 at a first predefined level $h_1$ with respect to a bottom level (that is the level of the second support 27) and performing a first cycle of N dosing discharges of long-type pasta through the fine dosing channel 13.

This step is indicated with number 103.

The first cycle of N dosing discharges of long-type pasta through the fine dosing channel 13 starts with configuring the second support 27 in a closed position within the fine dosing channel 13 so as to define the bottom level for pasta, whereas the partition element 7 is configured in the idle position.

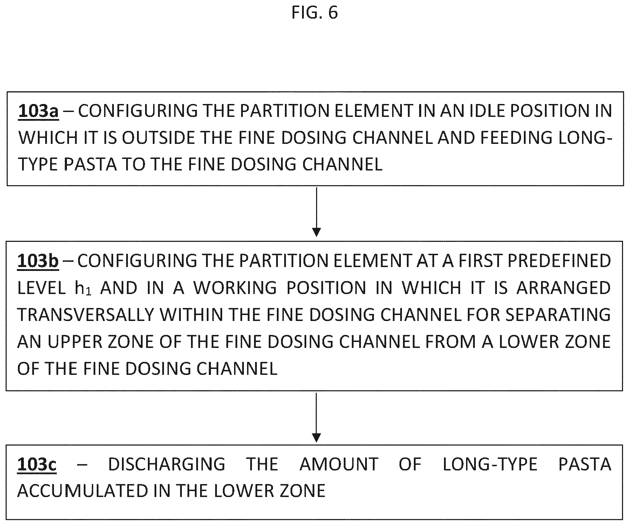

The fine dosing channel 13 is thus fed with long-type pasta coming from the descender 4 so that an amount of long-type pasta is accumulated on the second support 27 (see step 103a in figure 6).

Then, the partition element 7 at the first predefined level $h_1$ is configured in the working position in which it is arranged transversally within the fine dosing channel 13 for separating an upper zone 131 of the fine dosing channel 13 from a lower zone 132 of the fine dosing chamber 13 (see step 103b in figure 6).

In practice, the partition element 7 in the working position separates the long-type pasta accumulated in the upper zone 131 from the long-type pasta in the lower zone 132, that actually represents the dose to be discharged.

Then, the second support 27 is open so that the dose of pasta in the lower zone 132 is discharged (see step 103c in figure 6).

The steps 103a, 103b, 103c refer to a single dosing discharge of the first cycle. The overall step 103 is formed by repeating the single dosing discharge for N times.

In particular, the dosing discharges of the first cycle repeat with a time rate of 1 second.

At the completion of the first cycle of N dosing discharges, there is a step of weighing a first overall amount $W_1$ of long-type pasta just dosed (this step is numbered 104).

For example, the long-type pasta discharged at the end of the first cycle is accumulated in the second basket 9.

The first predefined level $h_1$ of the partition element 7 represents the x-coordinate of the first point A and the first overall amount $W_1$ divided by N represents the y-coordinate of the first point A.

Then, the partition element 7 is placed at a second predefined level $h_2$ with respect to the bottom level (that is the level of the second support 27) and it is performed a second cycle of N dosing discharges 105 of long-type pasta through the fine dosing channel 13.

This step is indicated with number 105.

The second cycle of N dosing discharges of long-type pasta through the fine dosing channel 13 starts with configuring the second support 27 in a closed position within the fine dosing channel 13 so as to define the bottom level for pasta, wherease the partition element 7 is configured in the idle position.

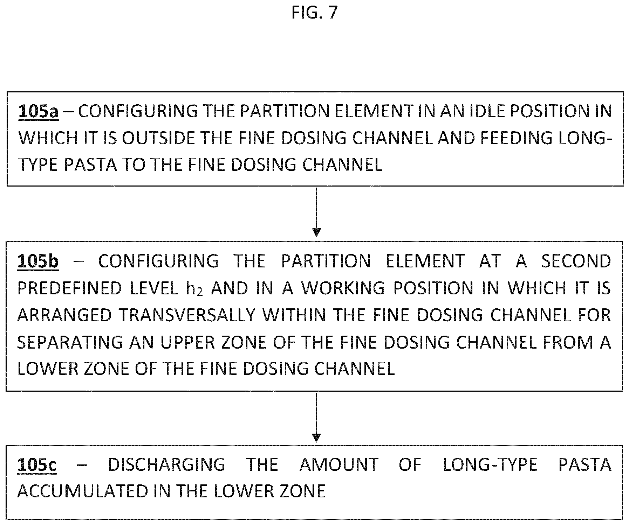

The fine dosing channel 13 is thus fed with long-type pasta coming from the descender 4 so that an amount of long-type pasta is accumulated on the second support 27 (see step 105a in figure 7).

The, the partition element 7 at the second predefined level $h_2$ is configured in the working position in which it is arranged transversally within the fine dosing channel 13 for separating an upper zone 131 of the fine dosing channel 13 from a lower zone 132 of the fine dosing chamber 13 (see step 105b in figure 7).

Then, the second support 27 is open so that pasta accumulated in the lower zone 132 is discharged (see step 105c in figure 7).

The steps 105a, 105b, 105c refer to a single dosing discharge of the second cycle. The overall step 105 is formed by repeating the single dosing discharge for N times.

In particular, the dosing discharges of the second cycle repeat with rate of 1 second.

At the completion of the second cycle of N dosing discharges, there is a step of weighing a second overall amount $W_2$ of long-type pasta just dosed (this step is numbered 106).

For example, the long-type pasta discharged at the end of the second cycle is accumulated in the second basket 9.

The second predefined level $h_2$ of the partition element 7 represents the x-coordinate of the second point B and the second overall amount $W_2$ divided by N represents the y-coordinate of the second point B.

The second predefined level $h_2$ is different from the first predefined level $h_1$.

Thus, when the partition element 7 is in the working position the upper zone 131 and the lower zone 132 defined within the fine dosing channel 13 have a different volume during the first cycle and the second cycle.

According to an embodiment, the second predefined level $h_2$ is lower than the first predefined level $h_1$.

In particular, the level is measured as number of discrete pitches of a predefined length.

According to an example, the first predefined level $h_1$ is 150 pitches, while the second predefined level $h_2$ is 25 pitches.

According to another embodiment, the second predefined level $h_2$ is higher than the first predefined level $h_1$.

After having completed both the first cycle and second cycle of N discharges and having measured the weight of the first and second overall amount $W_1$, $W_2$ of long-type pasta, the method continues with determining the slope m and the intercept q at the origin of the preliminary equation EQ1 of the characteristic straight line as:

*(1.2)*

$$m = \frac{W_1 - W_2}{N * (h_1 - h_2)}$$

*(1.3)*

$$q = W_1 - m * h_1$$

This step is numbered as 107.

The above-described calibration is performed only once before starting the actual dosing steps.

At the end of the calibration, the method 100 proceeds with the actual dosing steps.

The first dosing step envisages the rough dosing channel 12.

Long-type pasta is fed to the rough dosing channel 12 according to known ways (step 108).

The rough amount of long-type pasta discharged through the rough dosing channel 12 is collected at a bottom end 12b of the rough dosing channel 12, in the first basket 8.

The weight of this rough amount is thus measured (step 109). This is indicated here as $W_{ROUGH}$.

In particular, the weight of the rough amount is measured by the first weighting means 10.

The following step, indicated as 110, is calculating a fine weight $W_{FINE}$ of long-type pasta to be fed from the fine dosing channel 13 as a difference between the target weight $W_{TARGET}$ and the measured rough weight $W_{ROUGH}$, that is:

*(1.4)*

$$W_{FINE} = W_{TARGET} - W_{ROUGH}$$

The fine weight $W_{FINE}$ is then converted into a level $h_{FINE}$ of the partition element 7 with respect to a bottom level (that is the level of the second support 27). This conversion step, indicated with number 111, is done on the basis of the previously described calibration of the fine dosing channel 13.

The conversion step 111 comprises computing the level $h_{FINE}$ of the partition element 7 according to the formula:

*(1.5)*

$$h_{FINE} = \frac{(W_{TARGET} - W_{ROUGH}) - q}{m}$$

where $W_{TARGET}$ is the target weight, $W_{ROUGH}$ is the measured rough weight, m is the slope of the preliminary equation EQ1, and q is the intercept of the preliminary equation EQ1.

This computation is indicated with number 112.

Finally, the partition element 7 is arranged at the level $h_{FINE}$ obtained from the conversion.

The method 100 then continues with dosing the long-type pasta through the fine dosing channel 13 (step 113).

According to an embodiment of the invention, the method 100 also comprises a reiterated calibration during the actual dosing.

In particular, the characteristic straight line of weight W as a function of level h of the partition element 7 in the fine dosing channel 13 is time-adapted using a linear regression model (step 114).

In particular, the time-adapting step 114 adopts a simple regression model using the least-squares approach.

The time-adapting step 114 comprises, for each feeding of the fine dosing channel 13:

- measuring a fine weight $W_{FINE-i}$ of long-type pasta fed from the fine dosing channel 13 (step 114a);
- retrieving a level $h_{FINE-i}$ of the partition element 7 (step 114b) with respect to the bottom level (that is the level of the second support 27).

For each feeding, the fine weight $W_{FINE-i}$ of long-type pasta is carried out by the second loading cell 20a that is operatively active on the second basket 9.

In this way, there is obtained a plurality of points of fine weight $W_{FINE-i}$ and level $h_{FINE-i}$ in a dispersion graph G of fine weight $W_{FINE-i}$ as a function of level $h_{FINE-i}$ of the partition element 7 in the fine dosing channel 13.

A "least-squares" approach is then applied to the points of the dispersion graph G for calculating a slope m and an intercept q at origin of a straight line that fits the points in the dispersion graph G (step 117).

The general equation EQ2 of the straight line fitting the points in the dispersion graph G is again of the type:

*(1.1)*

$$W = m * h + q$$

where the slope m and the intercept q are here adjusted continuously, thus increasing the accuracy of the whole dosing apparatus 1.

The dispersiong graph G and the fitting straight line are illustrated in figure 9.

Thanks to this approach, the calibration of the height of the partition element 7 is updated during the actual dosing.

When the time-adaption is used, the step of converting 111 the fine weight $W_{FINE}$ into a level $h_{FINE}$ of the partition element 7 comprises computing the level $h_{FINE}$ of the partition element 7 according to the formula:

*(1.5)*

$$h_{FINE} = \frac{(W_{TARGET} - W_{ROUGH}) - q}{m}$$

where $W_{TARGET}$ is the target weight, $W_{ROUGH}$ is the measured rough weight, m is the slope of the adapted equation EQ2, and q is the intercept of the adapted equation EQ2.

According to one embodiment, time-adapting the characteristic straight line is carried out in response to the occurrence of a predefined condition at each feeding of the fine dosing channel 13.

Preferably, the predefined condition is set by a pre-established value of Pearson's correlation coefficient $\rho$.

In particular, the method 100 comprises calculating Pearson's correlation coefficient $\rho$ of the straight line fitting the dispersion graph G (step 115).

In response to a calculated Pearson's correlation coefficient $\rho$ higher than the pre-established value (step 116), the time adapting step 114 is performed. Preferably, the pre-established value of the Pearson's correlation coefficient $\rho$ is 0.7.

This value is chosen to assure that the relationship between the variables $h_{FINE-i}$, $W_{FINE-i}$ may be considered linear, and that linear regression model may be applied to determine the slope m and the intercept q of the adapted equation EQ2.

More preferably, the pre-established value of the Pearson's correlation coefficient $\rho$ is 0.85. This is considered a more reliable value than 0.7.

The variability of the Pearson's correlation coefficient $\rho$ in the fine dosing channel 13 is mainly due to the nature of the product (pasta elements).

The descent of the long-type pasta within the dosing channels 12, 13 is facilitated by the two distinct and independent vibration means 14, 15, as already explained. Thus, the Pearson's correlation coefficient $\rho$ changes on the basis of the intensity of vibration.

In particular, the method 100 comprises:

- setting an intensity of vibration to the fine dosing channel 13;
- in response to Pearson's correlation coefficient $\rho$ equal or lower than the pre-established value, increasing the intensity of vibration of the fine dosing channel 13.

The intensity of vibration imparted to the fine dosing channel 13 may be set independently by acting on the second vibration means 15.

The intensity of vibration is thus adjusted in real-time using the Pearson's correlation coefficient $\rho$ as a feedback variable.

Thus, the dosing apparatus 1 reaches the optimal fine vibration amplitude, reducing current consumption.

Considering each feeding, the formulas relative to the simple linear regression and the least-squares approach for determining the slope m and intercept q of the straight line that better fits the point in the dispersion graph G are:

$$(1.6)$$

$$\rho_{h_{FINE}W_{FINE}} = \frac{COV\left(h_{FINE-i}, W_{FINE-i}\right)}{\sqrt{\sigma^2_{h_{FINE-i}} * \sigma^2_{W_{FINE-i}}}}$$

$$(1.7)$$

$$m = \frac{COV\left(h_{FINE-i}, W_{FINE-i}\right)}{\sigma^2_{h_{FINE-i}}}$$

$$(1.8)$$

$$q = \overline{W_{FINE}} - m * \overline{h_{FINE}}$$

where:

- COV ($h_{FINE-i}$, $W_{FINE-i}$) is the covariance calculated on $h_{FINE-i}$, $W_{FINE-i}$ values
- $\sigma^2_{h_{FINE-i}}$ is the variance calculated on $h_{FINE-i}$ values
- $\overline{W_{FINE}}$ is the mean value calculated on $W_{FINE-i}$ values
- $\overline{h_{FINE}}$ is the mean value calculated on $h_{FINE-i}$ values

In particular, during the actual dosing there are collected M samples of fine weights $W_{FINE-i}$ discharged by the fine dosing channel 13 and corresponding level $h_{FINE-i}$ of the partition element 7.

Then, it is calculated the Pearson's correlation coefficient $\rho$ according to the formula (1.6).

If the Pearson's correlation coefficient $\rho$ is lower or equal to the pre-established value (for example 0.85), the intensity of vibration is increased of a predefined discrete quantity.

Then, other M samples are collected of fine weights $W_{FINE-i}$ discharged by the fine dosing channel 13 and corresponding level $h_{FINE-i}$ of the partition element 7.

Again, it is calculated the Pearson's correlation coefficient $\rho$ according to the formula (1.6).

If the Pearson's correlation coefficient $\rho$ is higher than to the pre-established value (for example 0.85), the iteration is stopped, and the reached intensity of vibration is maintained.

On the contrary, the iteration continues until the Pearson's correlation coefficient $\rho$ becomes higher than the pre-established value (for example 0.85).

Intensity of vibration is increased or decreased at each iteration depending on whether the Pearson's correlation coefficient $\rho$ is higher or lower than in the previous step.

The dosing apparatus 1 further comprises a control unit 16 that is configured to carry out many of the steps of the method 100.

In particular, the control unit 16 is configured to control the level h of the second partition element 7 with respect to the bottom level (that is the level of the second support 27) and the movement of the second partition element 7 within the fine dosing channel 13.

Preferably, the control unit 16 is configured to:

- calibrate the level h of the second partition element 7 in the fine dosing channel 13, as disclosed above;
- on the basis of the calibration of the fine dosing channel 13, convert a fine weight $W_{FINE}$ of long-type pasta to be fed from the fine dosing channel 13 into a level $h_{FINE}$ of the partition element 7 with respect to the bottom level;
- command the positioning of the partition element 7 at the level $h_{FINE}$ obtained from the conversion.

Preferably, the control unit 16 is also configured to control the opening and closing of the second support 27.

In an embodiment of the invention using a continuous calibration, the control unit 16 is also configured to time-adapt the characteristic straight line using a linear regression model, as described above.

Preferably, the control unit 16 is configured to calculate Pearson's correlation coefficient $\rho$ of the straight line of the linear regression model and, in response to a Pearson's correlation coefficient $\rho$ lower or equal to a pre-established value, to increase the intensity of vibration imparted by the second vibration means 15 to the fine dosing channel 13.

It must be noticed that this continuous calibration allows the operator to monitor whether the fine dosing device 3 is working properly.

For example, should the pasta elements get stuck in the fine dosing channel 13, this would affect the final weight.

Thus, the control unit 16 is preferably configured to send an alert signal (visual and/or audio) to the operators.

The control unit 16 may include a processor or controller, such as a general-purpose central processing unit, a microcontroller, a reduced instruction set computer processor, an application-specific integrated circuit, a programmable logic circuit, a field-programmable gate array, a digital signal processor, and/or any other data processing circuitry capable of executing the functions described herein. Part of the method described herein may be encoded as executable instructions embodied in a non-transitory tangible computer-readable storage medium, including, without limitation, a storage device and/or a memory device. Such instructions, when executed by a processing device, cause the processing device to perform at least a portion of the methods described herein.

The dosing apparatus 1 described and illustrated herewith has two dosing devices 2, 3 that constitute a dosing group.

In another embodiment, where the packaging rate needs to be increased, the dosing apparatus 1 comprises a plurality of dosing groups, each comprising two dosing devices 2, 3 (a rough one and a fine one).

Each dosing group may have a mean value that is different from the target weight, thus determining an overall accuracy that is worse than the accuracy of a single dosing group.

Using the proposed method, also a dosing apparatus 1 with multiple dosing groups achieves a greater accuracy.

For example, considering a dosing apparatus 1 with two dosing groups, each dosing group has a distribution of weight that is represented by a Gaussian curve. Thus, there are two Gaussian curves that are combined to obtain a Gaussian curve that is representative of the whole dosing apparatus 1.

Using the proposed method, the Gaussian curve of each dosing group is increased in accuracy, so that both said curves are closer - i.e., centred in mean values that are closer - thus the global Gaussian curve is also more accurate.

The characteristics and the advantages of a method for continuously dosing a target weight of long-type pasta and of a dosing apparatus, according to the present invention, are clear, as are the advantages.

In particular, the proposed method provides a more realistic model for the fine dosing channel. In fact, thanks to the use of two points for determining the characteristic straight line of the fine dosing channel, it is increased the accuracy in positioning the partition element of the fine dosing channel.

In fact, the linear model adopted here considers that "zero height" may corresponds to non-zero discharge of product.

Furthermore, thanks to the use of the linear regression model it is possible to time-adapt the level of the partition element in the fine dosing channel.

Thus, calibration of the fine dosing channel is updated on the basis of the variations of the system, taking into account the actual production rate, wearing of the components, deviation of the pasta elements from their ideal shape, etc.

This results in a more accurate computation of the weight to be discharged by the fine dosing channel to reach the target weight.

The proposed method and apparatus allow to reduce or even to avoid the manual intervention for adjusting the calibration.

**Claims**

1. A method (100) for continuously dosing a target weight $W_{TARGET}$ of long-type pasta using a dosing apparatus (1) comprising a rough dosing channel (12) and a fine dosing channel (13) with a partition element (7) transversally movable within the fine dosing channel (13), the method (100) comprising the steps of:

   - calibrating (101) a level (h) of the partition element (7) in the fine dosing channel (13);
   - feeding the rough dosing channel (12) with long-type pasta (108);
   - collecting a rough amount of long-type pasta discharged through the rough dosing channel (12) and measuring a weight $W_{ROUGH}$ of said rough amount (109);
   - calculating a fine weight $W_{FINE}$ of long-type pasta (110) to be fed from the fine dosing channel (13) as a difference between the target weight $W_{TARGET}$ and the measured rough weight $W_{ROUGH}$,
   - converting (111) the fine weight $W_{FINE}$ into a level $h_{FINE}$ of the partition element (7) with respect to a bottom level of the fine dosing channel (13) on the basis of the calibrating step (101) of the fine dosing channel (13);
   - arranging the partition element (7) at the level $h_{FINE}$ obtained from the conversion and feeding the fine dosing channel (13) with long-type pasta (113),

   **characterised in that** the step of calibrating (101) a level (h) of the partition element (7) in the fine dosing channel (13) comprises determining (102) a preliminary equation EQ1 of a characteristic straight line of weight (W) as a function of level (h) of the partition element (7) in the fine dosing channel (13), said preliminary equation EQ1 being determined by acquiring coordinates of a first point (A) and of a second point (B) on a plane (h, W) and by calculating the preliminary equation EQ1 as a straight line passing through said points (A, B).

2. The method (100) according to claim 1, wherein the step of determining (102) said preliminary equation EQ1 comprises:

   - placing the partition element (7) at a first predefined level $h_1$ with respect to said bottom level and performing a first cycle of N dosing discharges (103) of long-type pasta through the fine dosing channel (13);
   - weighing a first overall amount $W_1$ of long-type pasta dosed at the completion of the first cycle of N dosing discharges (104), the first predefined level $h_1$ being the x-coordinate of the first point (A) and the first overall amount $W_1$ divided by N being the y-coordinate of the first point (A);
   - placing the partition element (7) at a second predefined level $h_2$ with respect to said bottom level and performing a second cycle of N dosing discharges (105) of long-type pasta through the fine dosing channel (13), the second predefined level $h_2$ being different from the first predefined level $h_1$;
   - weighing a second overall amount $W_2$ of long-type pasta dosed at the completion of the second cycle of N dosing discharges (106), the second predefined level $h_2$ being the x-coordinate of the second point (B) and the second overall amount $W_2$ divided by N being the y-coordinate of the second point (B);

- determining a slope m and an intercept q at origin of the preliminary equation EQ1 (107) according to formulas:

(1.2)

$$m = \frac{W_1 - W_2}{N * (h_1 - h_2)}$$

(1.3)

$$q = W_1 - m * h_1$$

3.  The method (100) of claim 1 or 2, wherein the step of calibrating (101) the fine dosing channel (13) further comprises time-adapting (114) said characteristic straight line using a linear regression model.

4.  The method (100) of claim 3, wherein time-adapting (114) said characteristic straight line comprises, for each feeding (113) of the fine dosing channel (13):

    - measuring a fine weight $W_{FINE-i}$ of long-type pasta (114a) fed from the fine dosing channel (13);
    - retrieving a level $h_{FINE-i}$ of the partition element (7) with respect to said bottom level (114b),
    so as to obtain a plurality of points of fine weight $W_{FINE-i}$ and level $h_{FINE-i}$ in a dispersion graph (G) of fine weight $W_{FINE-i}$ as a function of level $h_{FINE-i}$ of the partition element (7) in the fine dosing channel (13);
    applying a least-squares approach (117) to the points of the dispersion graph (G) for calculating a slope m and an intercept q at origin of a straight line that fits the points in the dispersion graph (G).

5.  The method (100) according to claim 4, wherein time-adapting (114) said characteristic straight line is carried out in response to the occurrence of a predefined condition at each feeding of the fine dosing channel (13).

6.  The method (100) according to claim 5, further comprising calculating (115) Pearson's correlation coefficient ($\rho$) of the straight line fitting the dispersion graph (G), the predefined condition being a Pearson's correlation coefficient ($\rho$) higher than a pre-established value.

7.  The method (100) according to claim 6, further comprising:

    - setting an intensity of vibration to the fine dosing channel (13);
    - calculating Pearson's correlation coefficient ($\rho$) of the straight line fitting the dispersion graph (G);
    - in response to a calculated Pearson's correlation coefficient ($\rho$) equal or lower than the pre-established value, increasing the intensity of vibration of the fine dosing channel (13).

8.  The method (100) of any one of the claims 3 to 7, wherein the step of converting (111) the fine weight $W_{FINE}$ into a level $h_{FINE}$ of the partition element (7) comprises computing (112) the level $h_{FINE}$ of the partition element (7) according to the formula:

    (1.5)

    $$h_{FINE} = \frac{(W_{TARGET} - W_{ROUGH}) - q}{m}$$

    where $W_{TARGET}$ is the target weight, $W_{ROUGH}$ is the measured rough weight, m is the slope of the preliminary equation EQ1 or the time-adapted straight line, and q is the intercept at origin of the preliminary equation EQ1 or the time-adapted straight line.

9.  The method (100) according to any one of claims 2 to 8, wherein the step of performing the first cycle of N dosing discharges (103) of long-type pasta through the fine dosing channel (13) comprises repeating the following sequence for N times:

- configuring the partition element (7) in an idle position in which it is outside the fine dosing channel (13) and feeding long-type pasta to the fine dosing channel (103a);
- configuring the partition element (7) at the first predefined level $h_1$ and in a working position (103b) in which it is arranged transversally within the fine dosing channel (13) for separating an upper zone (131) of the fine dosing channel (13) from a lower zone (132) of the fine dosing chamber (13);
- discharging the amount of long-type pasta (103c) from the lower zone (132).

10. The method (100) according to any one of the claims 2 to 9, wherein the step of performing the second cycle of N dosing discharges (105) of long-type pasta through the fine dosing channel (13) comprises repeating the following sequence for N times:

- configuring the partition element (7) in an idle position in which it is outside the fine dosing channel (13) and feeding long-type pasta to the fine dosing channel (105a);
- configuring the partition element (7) at the second predefined level $h_2$ and in a working position (105b) in which it is arranged transversally within the fine dosing channel (13) for separating an upper zone (131) of the fine dosing channel (13) from a lower zone (132) of the fine dosing chamber (13);
- discharging the amount of long-type pasta (105c) from the lower zone (132).

11. The method (100) according to any one of claims 1 to 10, wherein the bottom level of the fine dosing channel (13) is defined by a second support (27) arranged inside fine dosing channel (13) and configurable at least in an open position in which it allows long-type pasta passing through, and a closed position in which it prevents long-type pasta passing thorugh.

12. A dosing apparatus (1) for dosing long-type pasta, said dosing apparatus (1) comprising:

- a feeding channel (4) for feeding long-type pasta;
- a rough dosing channel (12) and a fine dosing channel (13) in communication with said feeding channel (4) so as to receive long-type pasta, said dosing channels (12, 13) being oriented in such a way as to dose long-type pasta by gravity;
- a first partition element (6) arranged transversely to the rough dosing channel (12) and movable therethrough;
- a second partition element (7) arranged transversely to the fine dosing channel (13) and movable therethrough between a working position in which it is transversally inserted within the fine dosing channel (13), and an idle position in which it is extracted from the fine dosing channel (13);
- at least one first loading cell (10a) arranged downstream a bottom end (12b) of the rough dosing channel (12) for weighing long-type pasta transferred from the rough dosing channel (12);
- a control unit (16) configured to control a level (h) of the second partition element (7) with respect to a bottom level of the fine dosing channel (13) and the movement of the second partition element (7) within the fine dosing channel (13),

**characterised in that** said control unit (16) is configured to:

- calibrate a level (h) of the second partition element (7) in the fine dosing channel (13), said calibrating comprising determining a preliminary equation EQ1 of a characteristic straight line of weight (W) as a function of level (h) of the second partition element (7) in the fine dosing channel (13), said preliminary equation EQ1 being determined by acquiring coordinates of a first point (A) and of a second point (B) and by calculating the preliminary equation EQ1 as a straight line passing through said points (A, B);
- convert a fine weight $W_{FINE}$ of long-type pasta to be fed from the fine dosing channel (13) into a level $h_{FINE}$ of the partition element (7) with respect to said bottom level on the basis of the calibration of the fine dosing channel (13);
- command the positioning of the partition element (7) at the level $h_{FINE}$ obtained from the conversion.

13. The dosing apparatus (1) according to claims 12, wherein the control unit (16) is further configured to time-adapt said characteristic straight line using a linear regression model.

14. The dosing apparatus (1) according to claim 13, further comprising:

- first vibration means (14) that are operatively active on the rough dosing channel (12) for imparting vibrations thereto so as to facilitate the descent of long-type pasta;

- second vibration means (15) that are operatively active on the fine dosing channel (13) for imparting vibrations thereto so as to facilitate the descent of long-type pasta, the second vibration means (15) being distinct and independent from the first vibration means (14),

wherein said control unit (16) is further configured to calculate Pearson's correlation coefficient ($\rho$) of the straight line of the linear regression model and, in response to a Pearson's correlation coefficient ($\rho$) lower or equal to a pre-established value, the control unit (16) is configured to increase the intensity of vibration imparted by the second vibration means (15) to the fine dosing channel (13).

15. Computer program having instructions which, when executed by a computer device or system, cause the computing device or system to perform the method according to any one of claims 1 to 11.

**Patentansprüche**

1. Verfahren (100) zum kontinuierlichen Dosieren eines Zielgewichtes $W_{TARGET}$ von langen Teigwaren unter Verwendung einer Dosiervorrichtung (1), die einen Kanal zur Grobdosierung (12) und einen Kanal zur Feindosierung (13) mit einem Trennelement (7) umfasst, das in dem Kanal zur Feindosierung (13) quer beweglich ist, wobei das Verfahren (100) die Schritte umfasst:

- Kalibrieren (101) eines Füllstands (h) des Trennelements (7) im Kanal zur Feindosierung (13),
- Beschicken des Kanals zur Grobdosierung (12) mit langen Teigwaren (108),
- Sammeln einer groben Menge langer Teigwaren, die durch den Kanal zur Grobdosierung (12) entladen wird, und Messen des Gewichtes $W_{ROUGH}$ der groben Menge (109),
- Berechnen eines Feingewichtes $W_{FINE}$ der langen Teigwaren (110), die aus dem Kanal zur Feindosierung (13) zu beschicken sind, als Differenz zwischen dem Zielgewicht $W_{TARGET}$ und dem gemessenen groben Gewicht $W_{ROUGH}$,
- Umwandeln (111) des Feingewichtes $W_{FINE}$ in einen Füllstand $h_{FINE}$ des Trennelements (7) in Bezug auf einen niedrigsten Füllstand des Kanals zur Feindosierung (13) auf der Grundlage des Schrittes des Kalibrierens (101) des Kanals zur Feindosierung (13),
- Anordnen des Trennelements (7) auf dem Füllstand $h_{FINE}$, der durch das Umwandeln erhalten wird, und Beschicken des Kanals zur Feindosierung (13) mit langen Teigwaren (113),

dadurch gekennzeichnet, dass der Schritt des Kalibrierens (101) eines Füllstands (h) des Trennelements (7) im Kanal zur Feindosierung (13) das Ermitteln (102) einer vorläufigen Gleichung EQ1 einer charakteristischen Geraden des Gewichtes (W) in Abhängigkeit von dem Füllstand (h) des Trennelements (7) im Kanal zur Feindosierung (13) umfasst, wobei die vorläufige Gleichung EQ1 durch Erfassen der Koordinaten eines ersten Punktes (A) und eines zweiten Punktes (B) auf einer Ebene (h, W) und durch Berechnen der vorläufigen Gleichung EQ1 als eine Gerade, die durch die Punkte (A, B) verläuft, ermittelt wird.

2. Verfahren (100) nach Anspruch 1, wobei der Schritt des Ermittelns (102) der vorläufigen Gleichung EQ1 umfasst:

- Platzieren des Trennelements (7) auf einem ersten vordefinierten Füllstand $h_1$ in Bezug auf den niedrigsten Füllstand und Durchführen eines ersten Zyklus von N Dosierentladungen (103) von langen Teigwaren durch den Kanal zur Feindosierung (13),
- Wiegen einer ersten Gesamtmenge $W_1$ von dosierten langen Teigwaren nach Abschluss des ersten Zyklus von N Dosierentladungen (104), wobei der erste vordefinierte Füllstand $h_1$ die x-Koordinate des ersten Punktes (A) ist und die erste Gesamtmenge $W_1$ dividiert durch N die y-Koordinate des ersten Punktes (A) ist,
- Platzieren des Trennelements (7) auf einem zweiten vordefinierten Füllstand $h_2$ in Bezug auf den niedrigsten Füllstand und Durchführen eines zweiten Zyklus von N Dosierentladungen (105) von langen Teigwaren durch den Kanal zur Feindosierung (13), wobei der zweite vordefinierte Füllstand $h_2$ von dem ersten vordefinierten Füllstand $h_1$ verschieden ist,
- Wiegen einer zweiten Gesamtmenge $W_2$ von dosierten langen Teigwaren nach Abschluss des zweiten Zyklus von N Dosierentladungen (106), wobei der zweite vordefinierte Füllstand $h_2$ die x-Koordinate des zweiten Punktes (B) ist und die zweite Gesamtmenge $W_2$ dividiert durch N die y-Koordinate des zweiten Punktes (B) ist,
- Bestimmen einer Steigung m und eines Achsenabschnitts q am Ursprung der vorläufigen Gleichung EQ1 (107) gemäß den Formeln:

(1.2)

$$m = \frac{W_1 - W_2}{N * (h_1 - h_2)}$$

(1.3)

$$q = W_1 - m * h_1$$

3. Verfahren (100) nach Anspruch 1 oder 2, wobei der Schritt des Kalibrierens (101) des Kanals zur Feindosierung (13) ferner das zeitliche Anpassen (114) der charakteristischen Geraden unter Verwendung eines linearen Regressionsmodells umfasst.

4. Verfahren (100) nach Anspruch 3, wobei das zeitliche Anpassen (114) der charakteristischen Geraden für jedes Beschicken (113) des Kanals zur Feindosierung (13) umfasst:

- Messen eines Feingewichtes $W_{FINE-i}$ der langen Teigwaren (114a), die von dem Kanal zur Feindosierung (13) beschickt werden,
- Abrufen eines Füllstandes $h_{FINE-i}$ des Trennelements (7) in Bezug auf den niedrigsten Füllstand (114b), um mehrere Punkte des Feingewichtes $W_{FINE-i}$ und des Füllstandes $h_{FINE-i}$ in einer Grafik der Dispersion (G) des Feingewichtes $W_{FINE-i}$ in Abhängigkeit von dem Füllstand $h_{FINE-i}$ des Trennelements (7) in dem Kanal zur Feindosierung (13) zu erhalten,
Anwenden eines Ansatzes der kleinsten Quadrate (117) auf die Punkte der Grafik der Dispersion (G), um eine Steigung m und einen Achsenabschnitt q am Ursprung einer Geraden zu berechnen, die zu den Punkten in der Grafik der Dispersion (G) passt.

5. Verfahren (100) nach Anspruch 4, wobei das zeitliche Anpassen (114) der charakteristischen Geraden als Antwort auf das Eintreten einer vordefinierten Bedingung bei jedem Beschicken des Kanals zur Feindosierung (13) ausgeführt wird.

6. Verfahren (100) nach Anspruch 5, ferner umfassend das Berechnen (115) des Pearson-Korrelationskoeffizienten ($\rho$) der Geraden, die zu der Grafik der Dispersion (G) passt, wobei die vordefinierte Bedingung ein Pearson-Korrelationskoeffizient ($\rho$) ist, der höher als ein vorher festgelegter Wert ist.

7. Verfahren (100) nach Anspruch 6, ferner umfassend:

- Einstellen einer Intensität der Vibration am Kanal zur Feindosierung (13);
- Berechnen des Pearson-Korrelationskoeffizienten ($\rho$) der Geraden, die zu der Grafik der Dispersion (G) passt;
- als Antwort auf einen berechneten Pearson-Korrelationskoeffizienten ($\rho$), der gleich oder kleiner als der vorher festgelegter Wert ist, Erhöhen der Intensität der Vibration des Kanals zur Feindosierung (13).

8. Verfahren (100) nach einem der Ansprüche 3 bis 7, wobei der Schritt des Umwandelns (111) des Feingewichtes $W_{FINE}$ in einen Füllstand $h_{FINE}$ des Trennelements (7) das Berechnen (112) des Füllstands $h_{FINE}$ des Trennelements (7) nach der Formel umfasst:

(1.5)

$$h_{FINE} = \frac{(W_{TARGET} - W_{ROUGH}) - q}{m}$$

wobei $W_{TARGET}$ das Zielgewicht ist, $W_{ROUGH}$ das gemessene grobe Gewicht ist, m die Steigung der vorläufigen Gleichung EQ1 oder der zeitlich angepassten Geraden ist und q der Achsenabschnitt am Ursprung der vorläufigen Gleichung EQ1 oder der zeitlich angepassten Geraden ist.

9. Verfahren (100) nach einem der Ansprüche 2 bis 8, wobei der Schritt des Durchführens des ersten Zyklus von N Dosierentladungen (103) von langen Teigwaren durch den Kanal zur Feindosierung (13) das N-malige Wiederholen der folgenden Sequenz umfasst:

   - Konfigurieren des Trennelements (7) in einer Leerlaufposition, in der es sich außerhalb des Kanals zur Feindosierung (13) befindet, und Beschicken des Kanals zur Feindosierung mit langen Teigwaren (103a),
   - Konfigurieren des Trennelements (7) auf dem ersten vordefinierten Füllstand $h_1$ und in einer Arbeitsposition (103b), in der es in dem Kanal zur Feindosierung (13) quer angeordnet ist, um einen oberen Bereich (131) des Kanals zur Feindosierung (13) von einem unteren Bereich (132) der Kammer zur Feindosierung (13) zu trennen,
   - Entladen der Menge langer Teigwaren (103c) aus dem unteren Bereich (132).

10. Verfahren (100) nach einem der Ansprüche 2 bis 9, wobei der Schritt des Durchführens des zweiten Zyklus von N Dosierentladungen (105) von langen Teigwaren durch den Kanal zur Feindosierung (13) das N-malige Wiederholen der folgenden Sequenz umfasst:

   - Konfigurieren des Trennelements (7) in einer Leerlaufposition, in der es sich außerhalb des Kanals zur Feindosierung (13) befindet, und Beschicken des Kanals zur Feindosierung mit langen Teigwaren (105a),
   - Konfigurieren des Trennelements (7) auf dem zweiten vordefinierten Füllstand $h_2$ und in einer Arbeitsposition (105b), in der es in dem Kanal zur Feindosierung (13) quer angeordnet ist, um einen oberen Bereich (131) des Kanals zur Feindosierung (13) von einem unteren Bereich (132) der Kammer zur Feindosierung (13) zu trennen,
   - Entladen der Menge langer Teigwaren (105c) aus dem unteren Bereich (132).

11. Verfahren (100) nach einem der Ansprüche 1 bis 10, wobei der niedrigste Füllstand des Kanals zur Feindosierung (13) durch einen zweiten Träger (27) definiert wird, der innerhalb des Kanals zur Feindosierung (13) angeordnet ist und mindestens in einer offenen Position, in der er ermöglicht, dass die langen Teigwaren durchgelassen werden, und in einer geschlossene Position konfigurierbar ist, in der er verhindert, dass die langen Teigwaren durchgelassen werden.

12. Dosiervorrichtung (1) zum Dosieren von langen Teigwaren, wobei die Dosiervorrichtung (1) umfasst:

   - einen Beschickungskanal (4) zum Beschicken mit langen Teigwaren,
   - einen Kanal zur Grobdosierung (12) und einen Kanal zur Feindosierung (13), die mit dem Beschickungskanal (4) derart in Verbindung sind, um die langen Teigwaren zu empfangen, wobei die Kanäle zur Dosierung (12, 13) derart ausgerichtet sind, um die langen Teigwaren durch Schwerkraft zu dosieren,
   - ein erstes Trennelement (6), das quer zu dem Kanal zur Grobdosierung (12) angeordnet ist und dadurch beweglich ist,
   - ein zweites Trennelement (7), das quer zu dem Kanal zur Feindosierung (13) angeordnet ist und dadurch zwischen einer Arbeitsposition, in der es innerhalb des Kanals zur Feindosierung (13) quer eingefügt ist, und einer Leerlaufposition, in der aus dem Kanal zur Feindosierung (13) herausgezogen ist, beweglich ist,
   - mindestens eine erste Ladezelle (10a), die nachgelagert nach einem unteren Ende (12b) des Kanals zur Grobdosierung (12) angeordnet ist, um die langen Teigwaren zu wiegen, die von dem Kanal zur Grobdosierung (12) übertragen werden,
   - eine Steuereinheit (16), die ausgelegt ist, um einen Füllstand (h) des zweiten Trennelements (7) in Bezug auf einen niedrigsten Füllstand des Kanals zur Feindosierung (13) und die Bewegung des zweiten Trennelements (7) innerhalb des Kanals zur Feindosierung (13) zu steuern,

   **dadurch gekennzeichnet, dass** die Steuereinheit (16) ausgelegt ist, um:

   - einen Füllstand (h) des zweiten Trennelements (7) im Kanal zur Feindosierung (13) zu kalibrieren, wobei das Kalibrieren das Ermitteln einer vorläufigen Gleichung EQ1 einer charakteristischen Geraden des Gewichtes (W) in Abhängigkeit von dem Füllstand (h) des zweiten Trennelements (7) im Kanal zur Feindosierung (13) umfasst, wobei die vorläufige Gleichung EQ1 durch Erfassen der Koordinaten eines ersten Punktes (A) und eines zweiten Punktes (B) und durch Berechnen der vorläufigen Gleichung EQ1 als eine Gerade, die durch die Punkte (A, B) verläuft, ermittelt wird,
   - ein Feingewicht $W_{FINE}$ der langen Teigwaren, die aus dem Kanal zur Feindosierung (13) zu beschicken sind, in einen Füllstand $h_{FINE}$ des Trennelements (7) in Bezug auf den niedrigsten Füllstand auf der Grundlage des Kalibrierens des Kanals zur Feindosierung (13) umzuwandeln,
   - das Anordnen des Trennelements (7) auf dem Füllstand $h_{FINE}$, der durch das Umwandeln erhalten wird, zu steuern.

**13.** Dosiervorrichtung (1) nach Anspruch 12, wobei die Steuereinheit (16) ferner ausgelegt ist, um die charakteristische Geraden unter Verwendung eines linearen Regressionsmodells zeitlich anzupassen.

**14.** Dosiervorrichtung (1) nach Anspruch 13, ferner umfassend:

- erste Vibrationsmittel (14), die auf dem Kanal zur Grobdosierung (12) betriebswirksam aktiv sind, um auf diesen derart Vibrationen zu übertragen, um das Fallen langer Teigwaren zu erleichtern,
- zweite Vibrationsmittel (15), die auf dem Kanal zur Feindosierung (13) betriebswirksam aktiv sind, um auf diesen derart Vibrationen zu übertragen, um das Fallen langer Teigwaren zu erleichtern, wobei die zweiten Vibrationsmittel (15) verschieden und unabhängig von den ersten Vibrationsmitteln (14) sind,

wobei die Steuereinheit (16) ferner ausgelegt ist, um den Pearson-Korrelationskoeffizienten ($\rho$) der Geraden des linearen Regressionsmodells zu berechnen und als Antwort auf einen Pearson-Korrelationskoeffizienten ($\rho$), der kleiner als oder gleich dem vorher festgelegten Wert ist, ist die Steuereinheit (16) ausgelegt, um die Intensität der Vibration, die von den zweiten Vibrationsmitteln (15) auf den Kanal zur Feindosierung (13) übertragen wird, zu erhöhen.

**15.** Computerprogramm, aufweisend Anweisungen, die, wenn sie von einer Computervorrichtung oder einem Computersystem ausgeführt werden, die Computervorrichtung oder das Computersystem dazu veranlassen, das Verfahren nach einem der Ansprüche 1 bis 11 durchzuführen.

**Revendications**

**1.** Procédé (100) de dosage continu d'un poids cible $W_{TARGET}$ de pâtes de type long à l'aide d'un appareil de dosage (1) comprenant un canal de dosage grossier (12) et un canal de dosage fin (13) avec un élément de séparation (7) mobile transversalement à l'intérieur du canal de dosage fin (13), le procédé (100) comprenant les étapes de :

- calibrer (101) un niveau (h) de l'élément de séparation (7) dans le canal de dosage fin (13) ;
- alimenter le canal de dosage grossier (12) avec des pâtes de type long (108) ;
- collecter une quantité grossière de pâtes de type long déchargées à travers le canal de dosage grossier (12) et mesurer un poids $W_{ROUGH}$ de ladite quantité grossière (109) ;
- calculer un poids fin $W_{FINE}$ de pâtes de type long (110) à alimenter à partir du canal de dosage fin (13) comme une différence entre le poids cible $W_{TARGET}$ et le poids brut mesuré $W_{ROUGH}$ ;
- convertir (111) le poids fin $W_{FINE}$ en un niveau $h_{FINE}$ de l'élément de séparation (7) par rapport à un niveau inférieur du canal de dosage fin (13) sur la base de l'étape de calibrer (101) le canal de dosage fin (13) ;
- disposer l'élément de séparation (7) au niveau $h_{FINE}$ obtenu à partir de la conversion et alimenter le canal de dosage fin (13) en pâtes de type long (113),

**caractérisé en ce que** l'étape de calibrer (101) un niveau (h) de l'élément de séparation (7) dans le canal de dosage fin (13) comprend déterminer (102) une équation préliminaire EQ1 d'une ligne droite caractéristique de poids (W) en fonction du niveau (h) de l'élément de séparation (7) dans le canal de dosage fin (13), ladite équation préliminaire EQ1 étant déterminée en acquérant les coordonnées d'un premier point (A) et d'un second point (B) sur un plan (h, W) et en calculant l'équation préliminaire EQ1 comme une ligne droite passant par lesdits points (A, B).

**2.** Procédé (100) selon la revendication 1, dans lequel l'étape de déterminer (102) ladite équation préliminaire EQ1 comprend :

- placer l'élément de séparation (7) à un premier niveau prédéfini $h_1$ par rapport audit niveau inférieur et effectuer un premier cycle de N décharges de dosage (103) de pâtes de type long à travers le canal de dosage fin (13) ;
- peser une première quantité globale $W_1$ de pâtes de type long dosées à l'issue du premier cycle de N décharges de dosage (104), le premier niveau prédéfini $h_1$ étant la coordonnée x du premier point (A) et la première quantité globale $W_1$ divisée par N étant la coordonnée y du premier point (A) ;
- placer l'élément de séparation (7) à un second niveau prédéfini $h_2$ par rapport audit niveau inférieur et effectuer un second cycle de N décharges de dosage (105) de pâtes de type long à travers le canal de dosage fin (13), le second niveau prédéfini $h_2$ étant différent du premier niveau prédéfini $h_1$ ;

- peser une deuxième quantité globale $W_2$ de pâtes de type long dosées à l'issue du deuxième cycle de N décharges de dosage (106), le deuxième niveau prédéfini $h_2$ étant la coordonnée x du deuxième point (B) et la deuxième quantité globale $W_2$ divisée par N étant la coordonnée y du deuxième point (B) ;
- déterminer une pente m et une intersection q à l'origine de l'équation préliminaire EQ1 (107) selon des formules :

(1.2)

$$m = \frac{W_1 - W_2}{N * (h_1 - h_2)}$$

(1.3)

$$q = W_1 - m * h_1$$

3. Procédé (100) selon la revendication 1 ou 2, dans lequel l'étape de calibrer (101) le canal de dosage fin (13) comprend en outre l'adaptation temporelle (114) de ladite ligne droite caractéristique à l'aide d'un modèle de régression linéaire.

4. Procédé (100) selon la revendication 3, dans lequel l'adaptation temporelle (114) de ladite ligne droite caractéristique comprend, pour chaque alimentation (113) du canal de dosage fin (13) :

- mesurer un poids fin $W_{FINE-i}$ de pâtes de type long (114a) alimentées à partir du canal de dosage fin (13) ;
- récupérer un niveau $h_{FINE-i}$ de l'élément de séparation (7) par rapport audit niveau inférieur (114b),
afin d'obtenir une pluralité de points de poids fin $W_{FINE-i}$ et de niveau $h_{FINE-i}$ dans un graphique de dispersion (G) de poids fin $W_{FINE-i}$ en fonction du niveau $h_{FINE-i}$ de l'élément de séparation (7) dans le canal de dosage fin (13) ;
appliquer une approche par moindres carrés (117) des points du graphique de dispersion (G) pour calculer une pente m et une intersection q à l'origine d'une ligne droite qui correspond aux points dans le graphique de dispersion (G).

5. Procédé (100) selon la revendication 4, dans lequel l'adaptation temporelle (114) de ladite ligne droite caractéristique est effectuée en réponse à l'apparition d'une condition prédéfinie à chaque alimentation du canal de dosage fin (13).

6. Procédé (100) selon la revendication 5, comprenant en outre calculer (115) le coefficient de corrélation de Pearson ($\rho$) de la ligne droite s'ajustant au graphique de dispersion (G), la condition prédéfinie étant un coefficient de corrélation de Pearson ($\rho$) supérieur à une valeur préétablie.

7. Procédé (100) selon la revendication 6, comprenant en outre :

- régler une intensité de vibration sur le canal de dosage fin (13) ;
- calculer le coefficient de corrélation de Pearson ($\rho$) de la ligne droite correspondant au graphique de dispersion (G) ;
- en réponse à un coefficient de corrélation de Pearson calculé ($\rho$) égal ou inférieur à la valeur préétablie, augmenter l'intensité de vibration du canal de dosage fin (13).

8. Procédé (100) selon l'une quelconque des revendications 3 à 7, dans lequel l'étape de convertir (111) le poids fin $W_{FINE}$ en un niveau $h_{FINE}$ de l'élément de séparation (7) comprend le calcul (112) du niveau $h_{FINE}$ de l'élément de séparation (7) selon la formule :

(1.5)

$$h_{FINE} = \frac{(W_{TARGET} - W_{ROUGH}) - q}{m}$$

où $W_{TARGET}$ est le poids cible, $W_{ROUGH}$ est le poids brut mesuré, m est la pente de l'équation préliminaire EQ1 ou de la ligne droite adaptée au temps, et q est l'intersection à l'origine de l'équation préliminaire EQ1 ou de la ligne droite adaptée au temps.

9. Procédé (100) selon l'une quelconque des revendications 2 à 8, dans lequel l'étape d'effectuer le premier cycle de N décharges de dosage (103) de pâtes de type long à travers le canal de dosage fin (13) comprend la répétition de la séquence suivante pendant N fois :

- configurer l'élément de séparation (7) dans une position de repos dans laquelle il se trouve à l'extérieur du canal de dosage fin (13) et alimenter le canal de dosage fin (103a) en pâtes de type long ;
- configurer l'élément de séparation (7) au premier niveau prédéfini $h_1$ et dans une position de travail (103b) dans laquelle il est disposé transversalement à l'intérieur du canal de dosage fin (13) pour séparer une zone supérieure (131) du canal de dosage fin (13) d'une zone inférieure (132) de la chambre de dosage fin (13) ;
- décharger la quantité de pâtes de type long (103c) de la zone inférieure (132).

10. Procédé (100) selon l'une quelconque des revendications 2 à 9, dans lequel l'étape d'effectuer le deuxième cycle de N décharges de dosage (105) de pâtes de type long à travers le canal de dosage fin (13) comprend la répétition de la séquence suivante pendant N fois :

- configurer l'élément de séparation (7) dans une position de repos dans laquelle il est à l'extérieur du canal de dosage fin (13) et alimenter en pâtes de type long le canal de dosage fin (105a) ;
- configurer l'élément de séparation (7) au deuxième niveau prédéfini $h_2$ et dans une position de travail (105b) dans laquelle il est disposé transversalement à l'intérieur du canal de dosage fin (13) pour séparer une zone supérieure (131) du canal de dosage fin (13) d'une zone inférieure (132) de la chambre de dosage fin (13) ;
- décharger la quantité de pâtes de type long (105c) de la zone inférieure (132).

11. Procédé (100) selon l'une quelconque des revendications 1 à 10, dans lequel le niveau inférieur du canal de dosage fin (13) est défini par un second support (27) disposé à l'intérieur du canal de dosage fin (13) et configurable au moins dans une position ouverte dans laquelle il permet le passage de pâtes de type long, et une position fermée dans laquelle il empêche le passage de pâtes de type long.

12. Appareil de dosage (1) pour doser des pâtes de type long, ledit appareil de dosage (1) comprenant :

- un canal d'alimentation (4) pour alimenter des pâtes de type long ;
- un canal de dosage grossier (12) et un canal de dosage fin (13) en communication avec ledit canal d'alimentation (4) de manière à recevoir des pâtes de type long, lesdits canaux de dosage (12, 13) étant orientés de manière à doser les pâtes de type long par gravité ;
- un premier élément de séparation (6) disposé transversalement au canal de dosage grossier (12) et mobile à travers celui-ci ;
- un deuxième élément de séparation (7) disposé transversalement au canal de dosage fin (13) et mobile à travers celui-ci entre une position de travail dans laquelle il est inséré transversalement à l'intérieur du canal de dosage fin (13), et une position de repos dans laquelle il est extrait du canal de dosage fin (13) ;
- au moins une première cellule de chargement (10a) disposée en aval d'une extrémité inférieure (12b) du canal de dosage grossier (12) pour peser les pâtes de type long transférées depuis le canal de dosage grossier (12) ;
- une unité de commande (16) configurée pour commander un niveau (h) du deuxième élément de séparation (7) par rapport à un niveau inférieur du canal de dosage fin (13) et le mouvement du deuxième élément de séparation (7) à l'intérieur du canal de dosage fin (13),

**caractérisé en ce que** ladite unité de commande (16) est configurée pour :

- calibrer un niveau (h) du deuxième élément de séparation (7) dans le canal de dosage fin (13), ledit calibrage comprenant déterminer une équation préliminaire EQ1 d'une ligne droite caractéristique de poids (W) en fonction du niveau (h) du deuxième élément de séparation (7) dans le canal de dosage fin (13), ladite équation préliminaire EQ1 étant déterminée en acquérant les coordonnées d'un premier point (A) et d'un deuxième point (B) et en calculant l'équation préliminaire EQ1 comme une ligne droite passant par lesdits points (A, B) ;
- convertir un poids fin $W_{FINE}$ de pâtes de type long à alimenter à partir du canal de dosage fin (13) en un niveau $h_{FINE}$ de l'élément de séparation (7) par rapport audit niveau inférieur sur la base du calibrage du canal de dosage fin (13) ;
- commander le positionnement de l'élément de séparation (7) au niveau $h_{FINE}$ obtenu à partir de la conversion.

**13.** Appareil de dosage (1) selon la revendication 12, dans lequel l'unité de commande (16) est en outre configurée pour adapter temporellement ladite ligne droite caractéristique en utilisant un modèle de régression linéaire.

**14.** Appareil de dosage (1) selon la revendication 13, comprenant en outre :

- des premiers moyens de vibration (14) qui sont fonctionnellement actifs sur le canal de dosage grossier (12) pour lui communiquer des vibrations de manière à faciliter la descente des pâtes de type long ;
- des seconds moyens de vibration (15) qui sont fonctionnellement actifs sur le canal de dosage fin (13) pour lui communiquer des vibrations afin de faciliter la descente de pâtes de type long, les seconds moyens de vibration (15) étant distincts et indépendants des premiers moyens de vibration (14),

dans lequel ladite unité de commande (16) est en outre configurée pour calculer le coefficient de corrélation de Pearson ($\rho$) de la ligne droite du modèle de régression linéaire et, en réponse à un coefficient de corrélation de Pearson ($\rho$) inférieur ou égal à une valeur préétablie, l'unité de commande (16) est configurée pour augmenter l'intensité de vibration communiquée par les seconds moyens de vibration (15) au canal de dosage fin (13).

**15.** Programme informatique, ayant des instructions qui, lorsqu'elles sont exécutées par un dispositif ou un système informatique, amènent le dispositif ou le système informatique à mettre en oeuvre le procédé selon l'une quelconque des revendications 1 à 11.

FIG. 1

FIG. 2

FIG. 3

FIG. 4(a)     100

**101** – CALIBRATING A LEVEL OF THE PARTITION ELEMENT WITHIN THE FINE DOSING CHANNEL

**102** – DETERMINING A PRELIMINARY EQUATION EQ1 OF A CHARACTERISTIC STRAIGHT LINE (h, W) OF WEIGHT W AS A FUNCTION OF LEVEL h OF THE PARTITION ELEMENT IN THE FINE DOSING CHANNEL

**103** – PLACING THE PARTITION ELEMENT AT A FIRST PREDEFINED LEVEL $h_1$ WITH RESPECT TO A BOTTOM LEVEL OF THE FINE DOSING CHANNEL AND PERFORMING A FIRST CYCLE OF N DOSING DISCHARGES OF LONG-TYPE PASTA THROUGH THE FINE DOSING CHANNEL

**104** – WEIGHING A FIRST OVERALL AMOUNT $W_1$ OF LONG-TYPE PASTA DOSED AT THE COMPLETION OF THE FIRST CYCLE OF N DOSING DISCHARGES

**105** – PLACING THE PARTITION ELEMENT AT A SECOND PREDEFINED LEVEL $h_2$ WITH RESPECT TO THE BOTTOM LEVEL OF THE FINE DOSING CHANNEL AND PERFORMING A SECOND CYCLE OF N DOSING DISCHARGES OF LONG-TYPE PASTA THROUGH THE FINE DOSING CHANNEL

**106** – WEIGHING A SECOND OVERALL AMOUNT $W_2$ OF LONG-TYPE PASTA DOSED AT THE COMPLETION OF THE SECOND CYCLE OF N DOSING DISCHARGES

**107** – DETERMINING A SLOPE m AND AN INTERCEPT q AT ORIGIN OF THE PRELIMINARY EQUATION EQ1

FIG. 4(b)

**108** – FEEDING THE ROUGH DOSING CHANNEL WITH LONG-TYPE PASTA

**109** – COLLECTING A ROUGH AMOUNT OF LONG-TYPE PASTA DISCHARGED THROUGH THE ROUGH DOSING CHANNEL AND MEASURING A WEIGHT W$_{ROUGH}$ OF THE ROUGH AMOUNT

**110** – CALCULATING A FINE WEIGHT W$_{FINE}$ OF LONG-TYPE PASTA TO BE FED FROM THE FINE DOSING CHANNEL AS A DIFFERENCE BETWEEN THE TARGET WEIGHT W$_{TARGET}$ AND THE MEASURED ROUGH WEIGHT W$_{ROUGH}$

**111** – CONVERTING THE FINE WEIGHT W$_{FINE}$ INTO A LEVEL h$_{FINE}$ OF THE PARTITION ELEMENT WITH RESPECT TO THE BOTTOM LEVEL, ON THE BASIS OF THE CALIBRATION OF THE FINE DOSING CHANNEL

> **112** – COMPUTING THE LEVEL h$_{FINE}$ OF THE PARTITION ELEMENT ACCORDING TO THE FORMULA:
>
> $$h_{FINE} = \frac{(W_{TARGET} - W_{ROUGH}) - q}{m}$$

**113** – ARRANGING THE PARTITION ELEMENT AT THE LEVEL h$_{FINE}$ OBTAINED FROM THE CONVERSION AND FEEDING THE FINE DOSING CHANNEL WITH LONG-TYPE PASTA

FIG. 5

**101** – CALIBRATING A LEVEL OF THE PARTITION ELEMENT WITHIN THE FINE DOSING CHANNEL

**114** – TIME-ADAPTING THE CHARACTERISTIC STRAIGHT LINE USING A LINEAR REGRESSION MODEL SO AS TO OBTAIN A DISPERSION GRAPH OF FINE WEIGHT $W_{FINE-i}$ AS A FUNCTION OF LEVEL $h_{FINE-i}$ OF THE PARTITION ELEMENT IN THE FINE DOSING CHANNEL

**114a** – MEASURING A FINE WEIGHT $W_{FINE-i}$ OF LONG-TYPE PASTA FED FROM THE FINE DOSING CHANNEL

**114b** – RETRIEVING A LEVEL $h_{FINE-i}$ OF THE PARTITION ELEMENT WITH RESPECT TO THE BOTTOM LEVEL

**117** – APPLYING A LEAST-SQUARE APPROACH TO THE POINTS OF THE DISPERSION GRAPH

**115** – CALCULATING PEARSON'S CORRELATION COEFFICIENT OF THE STRAIGHT LINE FITTING THE DISPERSION GRAPH

**116** – PEARSON'S CORRELATION COEFFICIENT HIGHER THAN THE PRE-ESTABLISHED VALUE?

YES

FIG. 6

**103a** – CONFIGURING THE PARTITION ELEMENT IN AN IDLE POSITION IN WHICH IT IS OUTSIDE THE FINE DOSING CHANNEL AND FEEDING LONG-TYPE PASTA TO THE FINE DOSING CHANNEL

**103b** – CONFIGURING THE PARTITION ELEMENT AT A FIRST PREDEFINED LEVEL $h_1$ AND IN A WORKING POSITION IN WHICH IT IS ARRANGED TRANSVERSALLY WITHIN THE FINE DOSING CHANNEL FOR SEPARATING AN UPPER ZONE OF THE FINE DOSING CHANNEL FROM A LOWER ZONE OF THE FINE DOSING CHANNEL

**103c** – DISCHARGING THE AMOUNT OF LONG-TYPE PASTA ACCUMULATED IN THE LOWER ZONE

FIG. 7

**105a** – CONFIGURING THE PARTITION ELEMENT IN AN IDLE POSITION IN WHICH IT IS OUTSIDE THE FINE DOSING CHANNEL AND FEEDING LONG-TYPE PASTA TO THE FINE DOSING CHANNEL

**105b** – CONFIGURING THE PARTITION ELEMENT AT A SECOND PREDEFINED LEVEL $h_2$ AND IN A WORKING POSITION IN WHICH IT IS ARRANGED TRANSVERSALLY WITHIN THE FINE DOSING CHANNEL FOR SEPARATING AN UPPER ZONE OF THE FINE DOSING CHANNEL FROM A LOWER ZONE OF THE FINE DOSING CHANNEL

**105c** – DISCHARGING THE AMOUNT OF LONG-TYPE PASTA ACCUMULATED IN THE LOWER ZONE

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015044796 A1